# EUROPEAN PATENT SPECIFICATION

(11) **EP 1 610 484 B1**
(45) Date of publication and mention of the grant of the patent: **08.08.2007**
(21) Application number: 04425465.4
(22) Date of filing: 25.06.2004
(51) Int. Cl.: H04J 14/02

(54) **Scalable optical add-drop multiplexer equipped with optical protection mechanism**
Skalierbarer optischer Add/drop-Multiplexer mit optischem Schutzmechanismus
Multiplexeur optique d'insertion / extraction modulable doté d'un mécanisme de protection optique

(43) Date of publication of application: 28.12.2005
(73) Proprietor: SIEMENS AKTIENGESELLSCHAFT, 80333 München (DE)
(72) Inventor: Crognale, Claudio, 66034 Lanciano (IT); Saracino, Sante, 02015 Città Ducale (IT)

(56) References cited:
- EP-A- 1 069 720
- EP-A- 1 087 561

## Description

### Field of the invention

The present invention relates to the architecture of a scalable Optical Add-Drop Multiplexer (OADM) equipped with optical protection mechanism to be used in the structures of nodes within an optical ring, each of the nodes being capable to extract channels belonging to a WDM comb, and insert channels in another WDM comb coming from an opposite direction.

From a further point of view the present invention relates to devices, of the type fibre optics transceiver modules, capable to manage, thanks to the DWDM technique, optical signals on a single fibre.

### Background art

Optical transponders for DWDM applications are disclosed by leader Companies in optical technology (see http://www.jdsu.com/index.htm and, for example, and the JDS data-sheet OTPDR5101-LR for 10 Gb/s data-rate).

These devices integrate optics and electronics in a transponder module, usually compliant with a multisource agreement (MSA) standard package; they are designed for the DWDM ITU grid, providing a SONET or SDH compliant interface between the SONET/SDH photonic physical layer and the electrical layer.

The optical transponder modules are bi-directional and their major components include a DWDM optical transmitter; an optical receiver; a micro controller; a laser driver; and an integrated mux/demux with clock and data recovery (CDR) circuitry.

All these devices are characterized by being able to terminate the optical signal but they exhibit very little capacity to manipulate the optical signals within an "all optical" network (optical metro rings). In fact, even if their transmitters are equipped with wavelength tunable lasers, they don't allow the addiction, extraction and conversion of the optical signals.

Functionalities provided from the topical optical modules are related with the O/E/O conversion of a single wave-length (transceiver functionalities) and the Mux/D-Mux of the electrical signal (transponder functionalities).

Such modules, today, are provided with a MSA connector as electrical interface towards the main equipment units.

EP 1 069 720 A and EP 1 087 561 A disclose scalable add-drop multiplexers including a protection against failures. However, in both documents, protection requires use of a reserve line to which traffic is transferred in case of failure in a node. In case of the usual ring configuration, this results in bypassing a failed module and the cascaded ones, so that all traffic managed by the bypassed modules becomes lost. No protection for the single add/drop module in a cascade is envisaged, such as to prevent such loss. Moreover, as to scalability, EP 1 069 720 A discloses a scalability in the line bandwidth, i.e. in the number of channels conveyed by the links entering/leaving the node, but not a scalability in the node bandwidth, i.e. in the number of wavelengths dropped or added in the node: the latter capability is considered essential in an OADM for metropolitan networks, in which a flexible management of a small number of wavelengths belonging to a large aggregate signal travelling through the link is required, in order to size the OADM cost according to the band terminated on the optical node.

### Object of the Invention

It is an object of the present invention to provide a scalable Optical Add-Drop Multiplexer (OADM) with a cascade of interconnected add-drop optical transponder modules providing a protection for the individual module or modules.

It is another object of the present invention to provide an add-drop optical transponder module capable of being interconnected with similar modules to implement an add-drop multiplexer with module protection capabilities.

### Summary of the invention

The invention achieves said object by providing an optical transponder module in which said functionalities are included into the transponder in an appropriate way, capable to offer all features that allow the insertion of this unit in an OADM structure with a high degree of flexibility and scalability.

The basic architecture of a new family of modules is therefore claimed in the present application: the Optical Add-Drop Transponder (OADT) modules, which allow the management of a multi-wave WDM signal through the integration of optical/electrical functionalities and the implementation of a scalable OADM architecture.

Such modules will be provided with the same MSA connector as electrical interface towards the main equipment units.

In particular, the present invention provides a basic architecture for a scalable and reconfigurable bi-directional OADM transponder with optical-electrical/electro-optical signal conversions, electrical signal multiplexing/demultiplexing, add/drop and wavelength converter options.

The OADM Transponder includes an optical wavelength tunable drop and switch block (OD&SWU) section and an optical wavelength tunable add and switch block (OA&SWU) section.

Any carrier among the plurality of the wavelengths contained in the input WDM signal at the OD&SWU section can be selected and extracted by a remote control signal and routed to the optical-electrical signal conversion circuit while the rest of the WDM input signal is routed to one of the outputs of the OD&SWU section.

In the opposite direction, an electric signal, can be inserted, multiplexed and then converted in an optical signal having a selected wavelength within the ITU-T grid.

This optical signal is combined with a WDM signal, coming from one of the inputs of the OA&SWU section and routed by remote control, toward one of the outputs of that OA&SWU section.

Alternatively to the add/drop functionality, previously described, the optical signal, extracted by the OD&SWU section, can be converted into an electrical signal and routed, by setting two internal switches, to the OA&SWU section, so that a 3R regeneration or a wavelength conversion can be achieved.

The particular architecture of the OD&SWU and OA&SWU sections, allows the adoption of the module in a simple but very effective cascadable architecture realizing the functionalities of a Monolateral Bi-directional OADM (MBOADM).

The MBOADM is realised by the means of a plurality of OADM transponder modules, of the type object of the present invention, having the OD&SWU and OA&SWU sections nailed through the switches contained in each of them in a cascade architecture allowing the extraction (in the case of the OD&SWU) and the insertion (for the OA&SWU) of any subset of wavelengths belonging to two WDM signals, each one of them coming from opposite directions.

By adding an optical switch at the inputs of the OD&SWU of the first OADM Transponder and of the OA&SWU of the last OADM Transponder in such cascade architecture, a practical and functional protection mechanism can be provided that allows the removal or the substitution of any intermediate OADM Transponder.

### Brief description of the Drawings

The features of the present invention which are considered to be novel are set forth with particularity in the appended claims. The invention together with additional objects and advantages thereof maybe better understood from the following detailed description of a preferred embodiment, taken in conjunction with the accompanying drawings, in which:
- **Figure 1**: provides the block diagram of the OADM Transponder.
- **Figure 2a**: provides the example of scalability by means of optical wavelength tunable add and switch blocks (OA&SWU)
- **Figure 2b**: provides the example of scalability by means of optical wavelength tunable drop and switch blocks (OD&SWU)
- **Figure 2c**: provides the example of scalability by means of optical wavelength tunable add-drop and switch blocks (OAD&SWU)
- **Figure 3a**: depicts a Monolateral Bi-directional OADM (MBOADM) structure
- **Figure 3b**: provides the Bi-directional Bilateral Node (BBN) architectures
- **Figure 3c**: depicts a bi-directional optical ring application.

### Description of the preferred embodiment of the invention

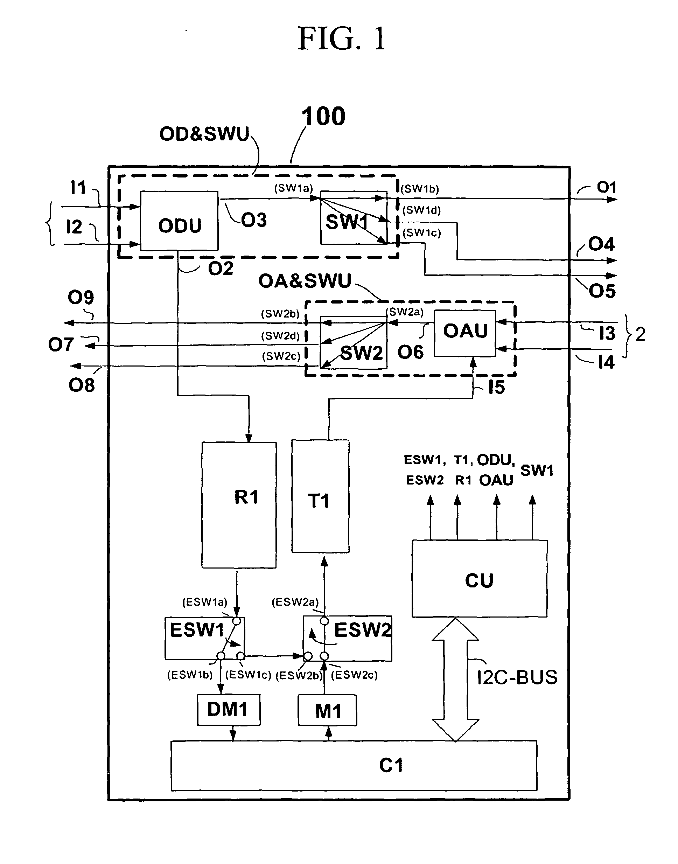

In Fig.1, a basic architecture for a scalable and reconfigurable bi-directional OADM transponder (100) with optical-electrical/electro-optical signal conversions, electrical signal multiplexing/demultiplexing, add/drop and wavelength converter options is shown.

The architecture consists of the elements listed below.
- An optical wavelength tunable drop and switch block (OD&SWU), that includes the following two cascading units:
   - an optical wavelength tunable drop unit (ODU) that, through the application of a voltage control signal, selects and extracts, from the WDM signal at its inputs I1 and I2, a single optical wavelength within the 1480-1620 nm ITU-T grid (Recommendation. G.692); the selected wavelength is outputted at the O2 port meanwhile the remaining part of the WDM input signal is routed to the output O3;
   - a 1x3 optical switch (SW1), with one input and three outputs; through the application of a voltage control signal, the switch can route the signals present at its input (SW1a) towards one of the outputs (SW1b), (SW1c), (SW1d); according to the SW1 setting, signals are routed to the outputs O1, O2 or O3 O4 or O5 of the OD&SWU.
- An optical wavelength tunable add and switch block (OA&SWU), consisting of the following two cascading units:
   - an optical add unit (OAU), able to accept any ITU-T grid wavelength through the input I5, to add it to a WDM input signal received on one of the inputs I3 and I4 and to outputs the new combination on the port 06;
   - a 1x3 optical switch (SW2), with one input and three outputs; through the application of a voltage control signal, the switch is adapted to route the signals present at its input (SW2a) towards one of the outputs (SW2b), (SW2c), (SW2d); according to the SW2 setting, optical signals available at the output of OAU unit are routed to the outputs O7, O8 or O9 of the OA&SWU.
- An optical receiver R1 able to perform the optical-electrical conversion, electrical amplification, clock recovery and data regeneration.
   - An optical transmitter T1, equipped with a driver circuitry and a wavelength tunable laser source, able to perform the electro-optical conversion of the data at its input by modulating a wavelength belonging to a subset of the G.691 ITU-T grid (the wavelength spacing depending on the application requirements).
   - Two 1x2 electrical switches (ESW1, ESW2), that are capable to connect, following the submitting of an external control voltage, their inputs (ESW1 a, ESW2a) to only one of their outputs (ESW1b, ESW2b), (ESW1c, ESW2c).
   - A Mux device (M1), able to serialize the input data signal provided in a parallel format.
   - A D-Mux device (DM1), able to translate in a parallel format the high bit rate signal extracted from the dropped optical wavelength.
   - A device control unit (DCU), capable to control all the sub-units, previously described. This control unit is, on its turn, connected to an external system control unit (SCU) through an appropriate interface (I2C Bus)
- An electrical connector (C1), whose characteristics are defined according to the specific application requirements.

In this structure (Fig.1), a WDM input signal (1) is expected to be present on one of the two inputs I1 and I2. Any carrier among the plurality of the wavelengths contained in the input WDM signal (1) can be selected and extracted by a remote control signal (via I2C bus interface on the connector) and routed to the output 02 of the unit ODU. This optical signal is sent to the input of the block R1, where a complete 3R signal regeneration is performed. Setting the switch ESW1 in position (ESW1a)-(ESW1b), this signal can be routed to the D-Mux device (DM1), de-multiplexed and sent to the connector pins. The remaining part of the WDM input signal (1) can be routed to the output 03 of the unit ODU and delivered to the input (SW1a) of the switch unit SW1. By remote control (via I2C bus interface on the connector), this signal can be routed toward one of the three outputs O1, O4, O5.

In the opposite direction, an electric signal, in a parallel format (typically sixteen bit wide), can be inserted and multiplexed by the Mux M1. Setting the switch ESW2 in position (ESW2a)-(ESW2c), the multiplexed signal is sent to the input of driver circuitry in the block T1 and then converted in an optical signal having a selected wavelength within the ITU-T grid. The selection being achieved by means of the information exchanged through the module control interface. This optical signal exiting the tunable laser is then connected to the input 15 of the unit OAU where it is combined with a WDM signal (2), coming from one (any) of the two inputs 13 and 14. The WDM input signal (2) can be routed to the output 06 of the unit OAU and then delivered to the input (SW2a) of the switch unit SW2. By remote control (via 12C bus interface on the connector), this signal can be routed toward one of the three outputs O7, O8, O9.

Alternatively to the add/drop functionality, previously described, by setting the switches ESW1, ESW2 in positions (ESW1a)-(ESW1c) and (ESW2a)-(ESW2b), the extracted signal can be inserted into the T1 input, so that a 3R regeneration or a wavelength conversion can be achieved. All functions mentioned above can be managed by means of the control unit CU. In this way, the transponder can be considered as a basic reconfigurable OADM unit, fully capable to manage any wavelength within a carriers comb according to the G.691 ITU-T grid.

According to the claimed invention, the particular architecture of the OD&SWU and OA&SWU elements, with two inputs and three selectable outputs for each element, allows the adoption of the module in a simple but very effective scalable Optical Add-Drop Multiplexer (OADM) equipped with optical protection mechanism.

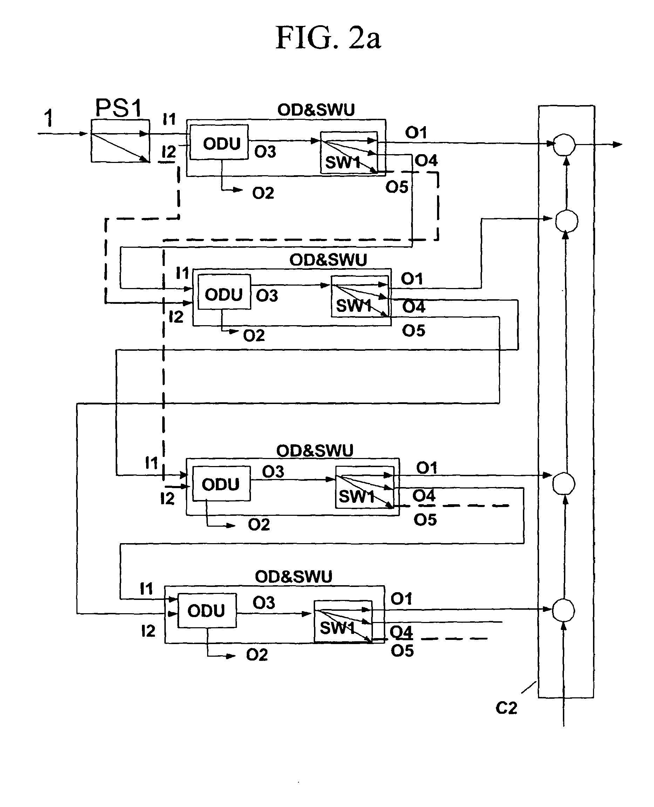

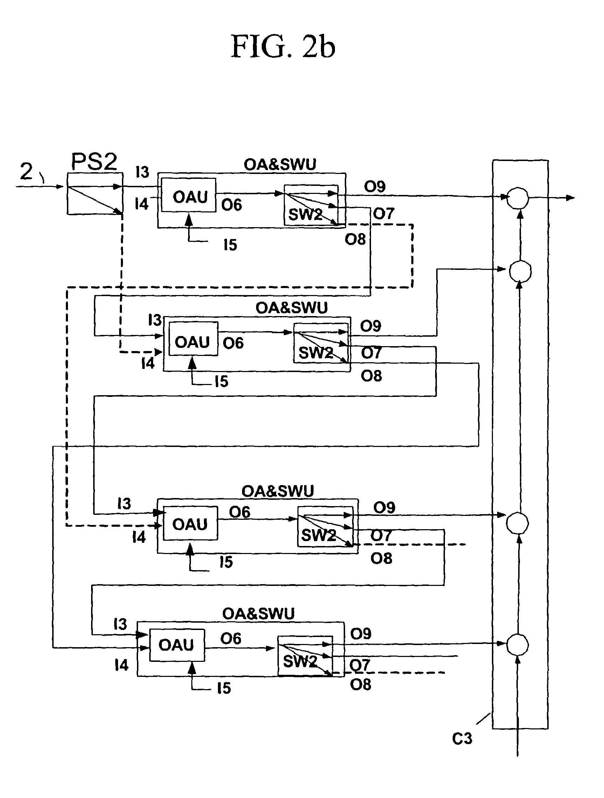

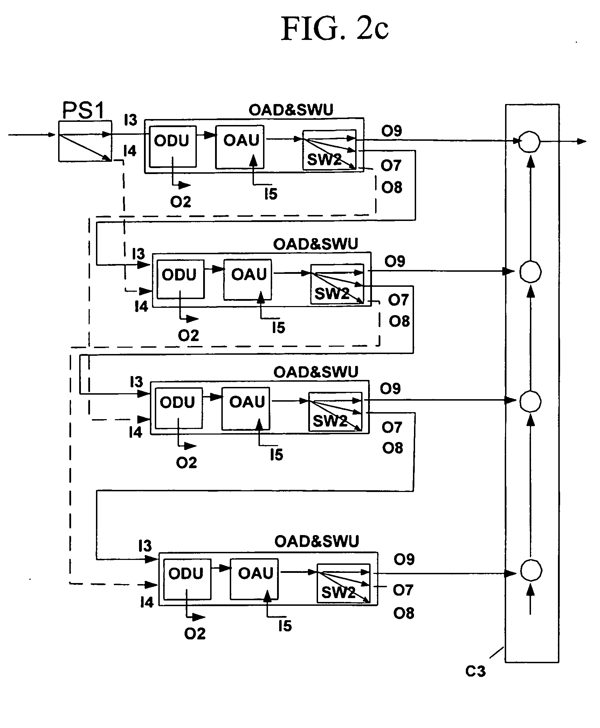

An example of scalability is shown in Fig. 2, for both drop (Fig.2a) and add (Fig.2b) sides.

In each figure, four of these units are nailed through the switches SW1 or SW2 contained in each of them, allowing the extraction (in the case of the OD&SWU in Fig.2a) and the insertion (for the OA&SWU in Fig.2b) of any subset of four wavelengths belonging to both (1) and (2) WDM combs, each one of them coming from opposite directions.

In fact, in the case of Fig.2a, the switch units SW1 of the first three blocks are remotely configured in position (SW1a)-(SW1d) (exit 04) and only the switch unit SW1 of the last fourth block is configured in position (SW1a)-(SW1b) (exit O1). In this way, the plurality (1) of carriers entering the input I1 of the first OD&SWU is progressively managed by the four cascaded elements, and the new plurality of optical carriers emerges at its output O1. Through the external combiners C2, the remaining part of the WDM signal (1) at the output 01 of the fourth module can be routed to the WDM output toward the link.

Also in the case of Fig.2b the switch units SW2 of the first three blocks are remotely configured in position (SW2a)-(SW2d) (exit O7) and only the switch unit SW2 of the last fourth block is configured in position (SW2a)-(SW2b) (exit O9).

As in the previous case, the number of carriers of the WDM signals (2) entering the input 13 of the first OA&SWU is progressively increased by the four cascaded elements, and the new plurality of optical carriers emerges at its output O9. Through the external combiner C3, the new WDM signal (2) at the output 09 of the fourth module can be routed to the WDM output toward the opposite link.

By adding a 1x2 optical switch at both inputs I1 and I3, of the first OD&SWU and OA&SWU units in each cascade, a practical and functional protection mechanism can be provided. For example, in Fig.2a, by connecting the exit 05 of the k-th unit to the input I2 of the (k+2)-th one, by setting the switch SW1 in the position (SW1a)-(SW1c), a new configuration of elements is formed, in which the (k+1)-th unit is excluded from the cascade. This allows removing or substituting any intermediate unit, meanwhile the PS1 switch (at the input of the cascade) allows extending this feature also to the first unit. The same feature is obtained in the other case of Fig.2b, where any OA&SWU can be excluded and removed from the cascade either by means of the other 1x2 optical switch (PS2) or by connecting the outputs 08 of the k-th module to the inputs I4 of the (k+2)th module, according to the scheme described before. Using this protection scheme, each transponder in the cascade can be by-passed and removed from the OADM, without any impact on the functionality of the rest of the OADM. At the same time the last module in the cascade can be considered in a 1:N protection scheme, meaning with this that the module is normally in a stand-by position, and it becomes active only when it has to replace one of the other modules, because this is faulty or because it has to be substituted.

The Fig.2c depicts a particular embodiment of the invention which follows from the previous described cascadable architectures: a plurality of optical wavelength tunable add/drop and switch blocks (OAD&SWU), obtained connecting directly one optical drop unit to the input of an OA&SWU block, are nailed by means of two inputs and three selectable outputs implementing the same protection mechanism.

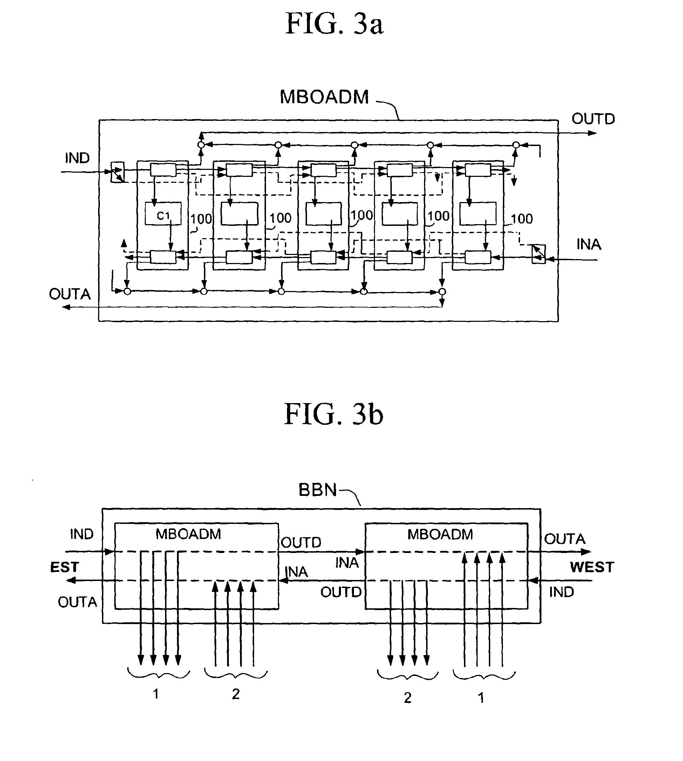

In Figs. 3a to 3c, examples of applications are reported. By combining the architectures in Fig. 2a and 2b, a Monolateral Bi-directional OADM (MBOADM) structure can be realized (see Fig.3a). According to the figure, this structure typically consists of a certain number of cascaded OADM transponders (100), five in the figure, and is capable to extract (from the input IND) and to add (at the output OUTA) the same number of channels.

The structure in Fig.3a is capable to extract channels belonging to a WDM comb (e.g. in the West-East direction), and insert channels in another WDM comb (e.g. in the East-West direction) coming from an opposite direction. Within an optical ring, each of the nodes should normally be allowed for both extract and insert operations and also for each of the two West-East and East-West directions. To represent this situation, two MBOADM block have been inserted into a Bi-directional Bilateral Node (BBN) architectures depicted in the scheme shown in Fig.3b. This architecture allows to extract, insert or convert any wavelength in both West-East and East-West directions and without limitations, and the node capacity can be increased simply by inserting new cascaded transponders.

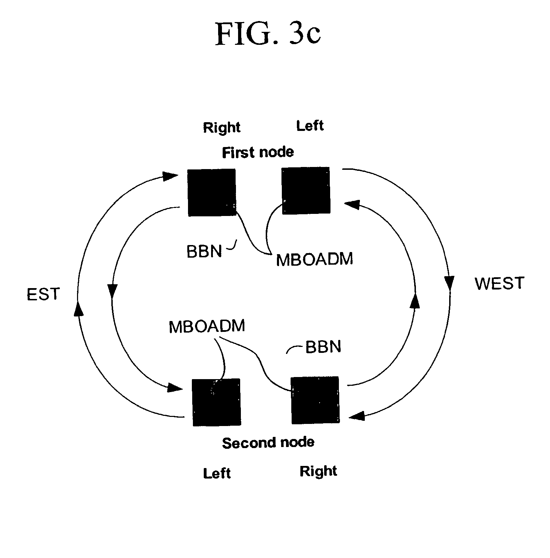

For sake of completeness and for more clarity, Fig.3c shows a simple but complete bi-directional optical ring incorporating two nodes. The complete functionality of the network is assured only by means of two BBN blocks and the two optical nodes communicate each other via the two EST and WEST ridges, along two opposite West-East and East-West directions, according to the following scheme.

In the EST ridge, the channels inserted in the MBOADM at the left of the second node are received via the external link and then extracted by the MBOADM at the right of the first node.

On the other hand, in the same ridge but along the opposite direction, the channels inserted in the MBOADM at the right of the first node are sent to the MBOADM at the left of the second node via the internal link and then extracted.

In the WEST ridge, according to the functionality of the BBN block in Fig.3b, the channels exiting from the MBOADM at the right of the first node are received by the cascaded MBOADM at the left of the same node, mixed with other new channels and the whole plurality is sent along the external link to the corresponding MBDOADM at the right of the second node. Here, the new channels inserted in the first node can be extracted and the remainders are sent toward the cascaded MBOADM at the left side of the same node, where other new channels are inserted and routed toward the external link.

Obviously, in the same ridge but along the opposite direction, the channels coming from the MBOADM at the left of the second node are sent in the cascaded MBOADM at the right of the second node, where new signals are added. Together with all the others, the new channels inserted in the MBOADM at the right of the second node are sent to the MBOADM at the left of the first node via the internal link and then extracted. The remaining channels are received by the cascaded MBOADM at the right side of the first node, where a new plurality of signals is formed when new channels are added.

The ring structure in Fig.3c must be intended only as an example of applicability of the transponder, object of the present invention. In fact, the optical transponder reported here can be employed in several architectures and even easily adapted to a mono-directional transmission. This particular feature can be obtained simply by inserting the output 01 in the input 13 and all functions described until now can be repeated in the new mono-directional configuration. Apart from all characteristics offered by this device in this case, a transponder adapted to the mono-directional scheme can be used in combination with the other bi-directional devices and inserted into a bi-directional ring as that one in Fig.3c, in order to improve the performances of the ring. In fact, in this way, in both ridges the wavelength conversion of the optical channels can be introduced and the optical channels manipulation into the ring can be increased. On the other hand, the wavelength conversion function allowed by the other bi-directional units can be employed to introduce further protection schemes that take into account eventual link damages.

In conclusion, the potentialities of the OADM transponder make it suitable for a large number of advanced network architectures that can be realized just according to the particular requirements of the link.

## Claims

1. Scalable optical add-drop multiplexer equipped with an optical protection mechanism, comprising a cascade of n optical modules (OD&SWU; OA&SWU), n ≥ 3, each optical module including an optical channel drop unit (OD&SWU) for dropping one optical channel from a received optical channels group and/or an optical channel add unit (OA&SWU) for adding one optical channel to a received optical channels group, each optical module having a first optical input (11; 13) for receiving said optical channels group from a previous module or from an external optical link and a first (O1; O9) and a second (O4; O7) optical outputs for connection to said external optical link or connected to a following module in the cascade, respectively, such multiplexer being
**characterized in that**:
- each module in the cascade has a second input (I2; I4) on which said optical channels group can be received in alternative to the first input (I1; I3), and a third output (O5; O8) selectable in alternative to said first and second outputs (O1, O4; O9, O7); the multiplexer comprises a 1x2 optical switch (PS1; PS2) ;
- a first module in the cascade has its first input (11; 13) connected to a first, output of the 1x2 optical switch (PS1; PS2), which has an input (1; 2) for connection to said external optical link and has a second output connected to the second input (I2; I4) of a second module in the cascade, and which is operable to connect its input (1; 2) with either its first or its second output depending on whether said first module is to be supplied with said received optical channels group or is to be bypassed;
- each module further includes a 1x3 optical switch (SW1, SW2) having one input (O3, O6) at which the optical channels group resulting from the drop and/or add operation is present, and three outputs (O1, O4, O5; O9, O7, O8) which form said first, second and third outputs of the module, wherein the second output (O4, O7) of the i-th module, 1 ≤i ≤n-1, is connected to the first input (I1; I3) of the (i+1)-th module and the third output (O5; O8) of the k-th module, 1 k ≤ n-2, is connected to the second input (12, 14) of the (k+2)-th module, and wherein each 1x3 optical switch (SW1, SW2) is operable to connect its input (O3; O6): in said k-th module, with either the second output (O4; O7) or the third output (O5; O8), depending on whether the (k+1)-th module is to be fed with the optical channels group resulting from the drop and/or add operation or is to be bypassed; in the last but one module, with the second output (O4; O7); and, in the last module, with the first output (O1; O9).

2. The scalable optical add-drop multiplexer of claim 1, **characterized in that** said n modules are active modules and are followed by an (n+1)-th module, which acts as a spare module and has its first and second inputs (I1, I2; I3, I4) connected with the second output (04; 07) of the n-th module and the third output (05; 08) of the (n-1)-th module, respectively, and its first output (O1, O9) for connection with said external link, said (n+1)-th module being in stand-by under regular operating conditions of all previous n modules, and being activated when a previous module is bypassed due the switching of either the 1x2 switch to its second output or a 1x3 switch to its third output.

3. The scalable optical add-drop multiplexer of claim 1 or 2, **characterized in that** it includes an optical combiner (C2; C3) having as many inputs as are the modules, and one output; the inputs being connected to the first output (O1; O9) of each optical module, and the output being for connection to said external optical link.

4. Monolateral Bi-directional Optical Add Drop Multiplexer, **characterized in that** it includes a first and a second scalable optical add-drop multiplexer of any of claims 1 to 3; the 1 x2 optical switches (PS1, PS2) of such first and second scalable optical add-drop multiplexers for receiving a first and second optical channels group from a West-East and an East-West external optical link; the optical combiners (C2, C3) of West-East and an East-West external optical link; the optical combiners (C2, C3) of such first and second scalable optical add-drop multiplexers for transmitting a first and a second optical channels group to a West-East and an East-West external optical link.

5. A Bi-directional Bilateral Node (BBN) comprising a first and a second Monolateral Bi-directional Optical Add-Drop Multiplexers of the claim 4, **characterized in that**:
- the output of the combiner (C2) belonging to the first Monolateral Bi-directional Optical Add-Drop Multiplexer is connected with the input of the switch (PS1) belonging to the second Monolateral Bi-directional Optical Add-Drop Multiplexer and
- the output of the combiner (C3) belonging to the second Monolateral Bi-directional Optical Add-Drop Multiplexer is connected with the input of the switch (PS2) belonging to the first Monolateral Bi-directional Optical Add-Drop Multiplexer.

6. A Mono-directional Bi-lateral Node comprising a Monolateral Bi-directional Optical Add Drop Multiplexer of the claim 4, **characterized in that** the output of the combiner (C2; C3) belonging to the first scalable optical add-drop multiplexer is connected with the input of the switch (PS2; PS1) belonging to the second scalable optical add-drop multiplexer architecture of the Monolateral Bi-directional Optical Add-Drop Multiplexer.

7. Scalable and reconfigurable bi-directional Optical Add-Drop Multiplexer Transponder (100) for the extraction and the insertion of an optical signal belonging to an optical channels group, including signal conversion means (R1, T1) for optical to electrical conversion and electrical to optical conversion; said Optical Add-Drop Multiplexer Transponder (100) being **characterized in that** it comprises:
- an optical channel drop module (OD&SWU) having a first and a second input (I1, I2), and a first, a second, a third and a fourth outputs (O1, O4, O5, O2); the optical channel drop module (OD&SWU) being adapted to select and to extract, from an optical channels group present at either the first or the second input (I1, I2), a single optical wavelength, the selected wavelength being outputted at the fourth output (O2), while the remaining part of the optical channels group is routed towards one of said first, second or third outputs (O1, O4, O5);
- an optical channel add module (OA&SWU) having a first, a second and a third input (I3, I4, I5), and a first, a second and a third output (O9, O7, O8); the optical channel add module (OA&SWU) being adapted to receive at the third input (I5) a single optical wavelength and to add such a single optical wavelength to an optical channels group received at either the first or the second input (I3, I4); the optical channels group resulting from the addition being routed towards one of said first, second or third (O9, O7, O8) outputs.

8. The scalable and reconfigurable bi-directional Optical Add-Drop Multiplexer Transponder of claim 7, **characterized in that** it comprises electrical switching means (ESW1, ESW2) for switching the electrical signal, generated from the optical to electrical conversion means (R1), to the electrical to optical conversion means (T1).

## Patentansprüche

1. Skalierbarer optischer Add-/Drop-Multiplexer mit einem optischen Schutzmechanismus aus einer Kaskade aus n optischen Modulen (OD&SWU; OA&SWU), n ≥3, wobei jedes optische Modul eine optische Kanal-Wegschalteinheit (OD&SWU) umfasst, um einen optischen Kanal aus einer empfangenen Gruppe aus optischen Kanälen wegzuschalten und/oder eine optische Kanal-Zuschalteinheit (OA&SWU), um einen optischen Kanal zu einer empfangenen Gruppe aus optischen Kanälen zuzuschalten, wobei jedes optische Modul einen ersten optischen Eingang (I1; I3) aufweist, um die Gruppe aus optischen Kanälen von einem vorherigen Modul oder von einer externen optischen Verbindung zu empfangen, und einen ersten (O1;O9) und einen zweiten (O4;O7) optischen Ausgang 5 zur Verbindung mit der externen optischen Verbindung oder zur Verbindung mit einem folgenden Modul in der Kaskade, wobei der Multiplexer **dadurch gekennzeichnet ist, dass**:
- jedes Modul in der Kaskade einen zweiten Eingang (I2; I4) aufweist, an dem diese Gruppe aus optischen Kanälen alternativ zu dem ersten Eingang (I1; I3) empfangen werden kann, und einen dritten Ausgang (O5; O8), der alternativ zu diesem ersten und zweiten Ausgang (O1, O4; O9, O7) wählbar ist;
- der Multiplexer einen 1x2 optischen Schalter (PS1; PS2) umfasst;
- ein erstes Modul in der Kaskade einen ersten Eingang (I1; I3) aufweist, der mit einem ersten Ausgang des 1x2 optischen Schalters (PS1; PS2) verbunden ist, welcher einen Eingang (1; 2) zur Verbindung mit dieser externen optischen Verbindung aufweist, und einen zweiten Ausgang aufweist, der mit dem zweiten Eingang (I2; I4) eines zweiten Moduls in der Kaskade verbunden ist, und welcher zur Verbindung von dessen Eingang (1; 2) mit entweder seinem ersten oder seinem zweiten Ausgang betreibbar ist, abhängig davon, ob dieses erste Modul mit dieser empfangenen Gruppe aus optischen Kanälen gespeist oder umgangen werden soll;
- jedes Moduls zudem einen 1x3 optischen Schalter (SW1, SW2) aufweist mit einem Eingang (O3, O6), an dem die Gruppe aus optischen Kanälen, die aus dem Wegschalt- und/oder Zuschaltvorgang resultiert, vorhanden ist, und drei Ausgängen (O1, O4, O5; O9, O7, O8), welche diese ersten, zweiten und dritten Ausgänge des Moduls bilden, worin der zweite Ausgang (O4, O7) des i-ten Moduls, 1 ≤i ≤n-1, mit dem ersten Eingang (I1; I3) des (i+1)-ten Moduls verbunden ist, und der dritte Ausgang (O5; O8) des k-ten Moduls, 1 ≤k ≤n-2, mit dem zweiten Eingang (I2, I4) des (k+2)-ten Moduls verbunden ist, und worin jeder 1x3 optische Schalter (SW1, SW2) betreibbar ist, um dessen Eingang (O3; O6) wie folgt zu verbinden: in diesem k-ten Modul entweder mit dem zweiten Ausgang (O4; O7) oder dem dritten Ausgang (O5; O8), abhängig davon, ob das (k+1)-te Modul mit der Gruppe aus optischen Kanälen gespeist werden soll, die aus dem Wegschalt- und/oder Zuschaltvorgang resultiert, oder ob es umgangen werden soll; in dem vorletzten Modul, mit dem zweiten Ausgang (O4; O7); und in dem letzten Modul mit dem ersten Ausgang (O1; O9).

2. Skalierbarer optischer Add-/Drop-Multiplexer nach Anspruch 1, **dadurch gekennzeichnet, dass** diese n Module aktive Module sind und von einem (n+1)-ten Modul gefolgt werden, welches als ein Ersatzmodul dient und dessen erste und zweite Eingänge (I1, I2; I3, I4) mit dem zweiten Ausgang (O4; O7) des n-ten Moduls bzw. mit dem dritten Ausgang (O5; O8) des (n-1)-ten Moduls verbunden sind, und dessen erster Ausgang (O1, O9) mit dieser externen Verbindung verbunden ist, wobei das (n+1)-te Modul unter normalen Betriebsbedingungen aller vorherigen n Module in Betriebsbereitschaft ist, und aktiviert wird, wenn ein vorheriges Modul umgangen wird wegen der Umschaltung entweder des 1x2 Schalters auf dessen zweiten Ausgang oder eines 1x3 Schalters auf dessen dritten Ausgang.

3. Skalierbarer optischer Add-/Drop-Multiplexer nach Anspruch 1 oder 2, **dadurch gekennzeichnet, dass** er einen optischen Kombinator (C2; C3) umfasst, der so viele Eingänge aufweist wie Module vorhanden sind, und einen Ausgang; wobei die Eingänge mit dem ersten Ausgang (O1; O9) jedes optischen Moduls verbunden sind, und wobei der Ausgang zur Verbindung mit dieser externen optischen Verbindung vorgesehen ist.

4. Monolateraler, bidirektionaler optischer Add-/Drop-Multiplexer, **dadurch gekennzeichnet, dass** er einen ersten und einen zweiten skalierbaren, optischen Add-/Drop-Multiplexer nach einem der Ansprüche 1 bis 3 umfasst; die 1x2 optischen Schalter (PS1, PS2) dieser ersten und zweiten skalierbaren, optischen Add-/Drop-Multiplexer zum Empfangen einer ersten und zweiten Gruppe aus optischen Kanälen von einer externen optischen West-Ost- und einer Ost-West-Verbindung; die optischen Kombinatoren (C2, C3) dieser ersten und zweiten skalierbaren, optischen Add-/Drop-Multiplexer zur Übertragung einer ersten und zweiten Gruppe aus optischen Kanälen zu einer externen optischen West-Ost- und einer Ost-West-Verbindung.

5. Bidirektionaler, bilateraler Knoten (BBN) mit einem ersten und einem zweiten monolateralen, bidirektionalen, optischen Add-/Drop-Multiplexer nach Anspruch 4, **dadurch gekennzeichnet, dass**:
- der Ausgang des Kombinators (C2), der zu dem ersten monolateralen, bidirektionalen, optischen Add-/Drop-Multiplexer gehört, verbunden ist mit dem Eingang des Schalters (PS1), der zu dem zweiten monolateralen, bidirektionalen, optischen Add-/Drop-Multiplexer gehört, und dass
- der Ausgang des Kombinators (C3), der zu dem zweiten monolateralen, bidirektionalen, optischen Add-/Drop-Multiplexer gehört, verbunden ist mit dem Eingang des Schalters (PS2), der zu dem ersten monolateralen, bidirektionalen, optischen Add-/Drop-Multiplexer gehört.

6. Monodirektionaler, bilateraler Knoten mit einem monolateralen, bidirektionalen optischen Add-/Drop-Multiplexer nach Anspruch 4, **dadurch gekennzeichnet, dass** der Ausgang des Kombinators (C2; C3), der zu dem ersten skalierbaren, optischen Add-/Drop-Multiplexer gehört, verbunden ist mit dem Eingang des Schalters (PS2; PS1), der zu der zweiten skalierbaren, optischen Add-/Drop-Multiplexerarchitektur des monolateralen, bidirektionalen, optischen Add-/Drop-Multiplexers gehört.

7. Skalierbarer und rekonfigurierbarer, bidirektionaler, optischer Add-/Drop-Multiplexer-Transponder (100) für die Extraktion und die Insertion eines optischen Signals, das zu einer Gruppe aus optischen Kanälen gehört, einschließlich von Signalumwandlungsmitteln (R1, T1) für die opto-/elektrische und elektro-/optische Umwandlung; wobei dieser optische Add-/Drop-Multiplexer-Transponder (100) **dadurch gekennzeichnet ist, dass** er folgendes umfasst:
- ein optisches Kanal-Wegschaltmodul (OD&SWU) mit einem ersten und einem zweiten Eingang (I1, I2) und einem ersten, einem zweiten, einem dritten und einem vierten Ausgang (O1, O4, O5, O2); wobei das optische Kanal-Wegschaltmodul (OD&SWU) darauf ausgelegt ist, aus einer Gruppe aus optischen Kanälen, die entweder an dem ersten oder an dem zweiten Eingang (I1, I2) vorhanden ist, eine einzelne optische Wellenlänge auszuwählen und zu extrahieren, wobei die gewählte Wellenlänge an dem vierten Ausgang (O2) ausgegeben wird, während der übrige Teil der Gruppe aus optischen Kanälen zu einem dieser ersten, zweiten oder dritten Ausgänge (O1, O4, O5) weitergeleitet wird;
- ein optisches Kanal-Zuschaltmodul (OA&SWU) mit einem ersten, zweiten und dritten Eingang (I3, I4, I5) und einem ersten, zweiten und dritten Ausgang (O9, O7, O8); wobei das optische Kanal-Zuschaltmodul (OA&SWU) darauf ausgelegt ist, an dem dritten Eingang (I5) eine einzelne optische Wellenlänge zu empfangen und diese einzelne optische Wellenlänge zu einer Gruppe aus optischen Kanälen zuzuschalten, die entweder an dem ersten oder dem zweiten Eingang (I3, 14) empfangen wird; wobei die Gruppe aus optischen Kanälen, die aus dem Zuschalten resultiert, zu einem dieser ersten, zweiten oder dritten Ausgänge (O9, O7, O8) weitergeleitet wird.

8. Skalierbarer und rekonfigurierbarer, bidirektionaler, optischer Add-/Drop-Multiplexer-Transponder nach Anspruch 7, **dadurch gekennzeichnet, dass** er elektrische Schaltmittel (ESW1, ESW2) umfasst, um das elektrische Signal, das von dem opto-elektrischen Umwandlungsmittel (R1) erzeugt wird, auf das elektro-optische Umwandlungsmittel (T1) umzuschalten.

## Revendications

1. Multiplexeur optique modulable d'insertion/extraction équipé d'un mécanisme de protection optique, comprenant une cascade de n modules optiques (OD&SWU ; OA&SWU), n ≥ 3, chaque module optique incluant une unité d'extraction de canal optique (OD&SWU) pour extraire un canal optique d'un groupe de canaux optiques reçu et/ou une unité d'insertion de canal optique (OA&SWU) pour insérer un canal optique dans un groupe de canaux optiques reçu, chaque module optique ayant une première entrée optique (I1 ; I3) pour recevoir ledit groupe de canaux optiques d'un module précédent ou d'une liaison optique externe et une première (O1 ; O9) et une deuxième (O4 ; O7) sorties optiques pour connexion à ladite liaison optique externe ou connectées à un module suivant dans la cascade, respectivement, ledit multiplexeur étant
**caractérisé en ce que** :
- chaque module dans la cascade a une deuxième entrée (I2 ; I4) sur laquelle ledit groupe de canaux optiques peut être reçu à titre d'alternative à la première entrée optique (I1 ; I3), et une troisième sortie (O5 ; O8) sélectionnable à titre d'alternative auxdites première et deuxième sorties (O1, O4 ; O9, O7) ;
- le multiplexeur comprend un commutateur optique 1x2 (PS1 ; PS2) ;
- un premier module dans la cascade a sa première entrée (I1 ; I3) connectée à une première sortie du commutateur optique 1x2 (PS1 ; PS2), qui a une entrée (1 ; 2) pour connexion à ladite liaison optique externe et a une deuxième sortie connectée à la deuxième entrée (I2 ; I4) d'un deuxième module dans la cascade, et qui peut être opérée pour connecter son entrée (1 ; 2) avec soit sa première, soit sa deuxième sortie selon que ledit premier module doit recevoir ledit groupe de canaux optiques reçu ou doit être contourné ;
- chaque module inclut en outre un commutateur optique 1x3 (SW1, SW2) ayant une entrée (O3, O6) à laquelle le groupe de canaux optiques résultant de l'opération d'extraction et/ou d'insertion est présent, et trois sorties (O1, O4, O5 ; O9, O7, O8) qui forment lesdites première, deuxième et troisième sorties du module, dans lequel la deuxième sortie (04, 07) du i^{ème} module, 1 ≤ i ≤ n-1, est connectée à la première entrée (I1; I3) du (i+1) ^{ème} module et la troisième sortie (05 ; 08) du k^{ème} module, 1 ≤ k ≤ n-2, est connectée à la deuxième entrée (I2, I4) du (k+2) ^{ème} module, et dans lequel chaque commutateur optique 1x3 (SW1, SW2) est utilisable pour connecter son entrée (O3 ; O6) dans ledit k^{ème} module, avec soit la deuxième sortie (O4 ; O7), soit la troisième sortie (O5 ; O8), selon que le (k+1) ^{ème} module doit recevoir le groupe de canaux optiques résultant de l'opération d'extraction et/ou d'insertion ou doit être contourné ; dans l'avant-dernier module, avec la deuxième sortie (O4 ; O7) ; et, dans le dernier module, avec la première sortie (O1 ; O9).

2. Multiplexeur optique modulable d'insertion/extraction selon la revendication 1, **caractérisé en ce que** lesdits n modules sont des modules actifs et sont suivis par un (n+1) ^{ème} module, qui agit comme un module de secours et a sa première et sa deuxième entrées (I1, I2 ; I3, I4) connectées avec la deuxième sortie (O4 ; O7) du n^{ème} module et la troisième sortie (O5 ; O8) du (n-1) ^{ème} module, respectivement, et sa première sortie (O1 , O9) pour connexion avec ladite liaison externe, ledit (n+1) ^{ème} module étant en veille en conditions de fonctionnement normales de tous les n modules précédents, et étant activé lorsqu'un module précédent est contourné du fait de la commutation soit du commutateur 1x2 sur sa deuxième sortie, soit d'un commutateur 1x3 sur sa troisième sortie.

3. Multiplexeur optique modulable d'insertion/extraction selon la revendication 1 ou 2, **caractérisé en ce qu'**il inclut un combineur optique (C2 ; C3) ayant autant d'entrées qu'il y a de modules, et une sortie ; les entrées étant connectées à la première sortie (O1, O9) de chaque module optique, et la sortie étant pour connexion avec ladite liaison optique externe.

4. Multiplexeur Optique Bidirectionnel Monolatéral d'Insertion/Extraction, **caractérisé en ce qu'**il inclut un premier et un deuxième multiplexeurs optiques modulables d'insertion/extraction selon l'une quelconque des revendications 1 à 3 ; les commutateurs optiques 1x2 (PS1, PS2) de tels premier et deuxième multiplexeurs optiques modulables d'insertion/extraction pour recevoir un premier et un deuxième groupes de canaux optiques d'une liaison optique externe Ouest-Est et d'une liaison optique externe Est-Ouest ; les combineurs optiques (C2, C3) de tels premier et deuxième multiplexeurs optiques modulables d'insertion/extraction pour transmettre un premier et un deuxième groupes de canaux optiques à une liaison optique externe Ouest-Est et à une liaison optique externe Est-Ouest.

5. Noeud Bilatéral Bidirectionnel (BBN) comprenant un premier et un deuxième Multiplexeurs Optiques Bidirectionnels Monolatéraux d'Insertion/Extraction selon la revendication 4, **caractérisé en ce que** :
- la sortie du combineur (C2) appartenant au premier Multiplexeur Optique Bidirectionnel Monolatéral d'Insertion/Extraction est connectée avec l'entrée du commutateur (PS1) appartenant au deuxième Multiplexeur Optique Bidirectionnel Monolatéral d'Insertion/Extraction et
- la sortie du combineur (C3) appartenant au deuxième Multiplexeur Optique Bidirectionnel Monolatéral d'Insertion/Extraction est connectée avec l'entrée du commutateur (PS2) appartenant au premier Multiplexeur Optique Bidirectionnel Monolatéral d'Insertion/Extraction.

6. Noeud Bilatéral Monodirectionnel comprenant un Multiplexeur Optique Bidirectionnel Monolatéral d'Insertion/Extraction selon la revendication 4, **caractérisé en ce que** la sortie du combineur (C2 ; C3) appartenant au premier multiplexeur optique modulable d'insertion/extraction est connectée avec l'entrée du commutateur (PS2 ; PS1) appartenant à la deuxième architecture de multiplexeur optique modulable d'insertion/extraction du Multiplexeur Optique Bidirectionnel Monolatéral d'Insertion/Extraction.

7. Répéteur Multiplexeur Optique bidirectionnel modulable et reconfigurable d'Insertion/Extraction (100) pour l'extraction et l'insertion d'un signal optique appartenant à un groupe de canaux optiques, incluant un moyen de conversion de signaux (R1, T1) pour une conversion optique à électrique et une conversion électrique à optique ; ledit Répéteur Multiplexeur Optique d'Insertion/Extraction (100) étant **caractérisé en ce qu'**il comprend :
- un module d'extraction de canal optique (OD&SWU) ayant une première et une deuxième entrée (I1 , I2), et une première, une deuxième, une troisième et une quatrième sorties (O1, O4, O5, O2) ; le module d'extraction de canal optique (OD&SWU) étant adapté pour sélectionner et pour extraire, d'un groupe de canaux optiques présent soit à la première, soit à la deuxième entrée (I1, I2), une longueur d'onde optique unique, la longueur d'onde sélectionnée étant délivrée en sortie à la quatrième sortie (O2), tandis que la partie restante du groupe de canaux optiques est acheminée vers l'une desdites première, deuxième ou troisième sorties (O1, O4, O5) ;
- un module d'insertion de canal optique (OA&SWU) ayant une première, une deuxième et une troisième entrée (I3, I4, I5), et une première, une deuxième et une troisième sortie (O9, O7, O8) ; le module d'insertion de canal optique (OA&SWU) étant adapté pour recevoir à la troisième sortie (I5) une longueur d'onde optique unique et pour insérer une telle longueur d'onde optique unique dans un groupe de canaux optiques reçu soit à la première, soit à la deuxième entrée (I3, I4); le groupe de canaux optiques résultant de l'insertion étant acheminé vers l'une desdites première, deuxième ou troisième (O9, O7, O8) sorties.

8. Répéteur Multiplexeur Optique bidirectionnel modulable et reconfigurable d'Insertion/Extraction selon la revendication 7, **caractérisé en ce qu'**il comprend un moyen de commutation électrique (ESW1, ESW2) pour commuter le signal électrique, généré à partir du moyen de conversion optique à électrique (R1), sur le moyen de conversion électrique à optique (T1).
